# EUROPÄISCHE PATENTSCHRIFT

(11) **EP 0 823 562 B1**
(45) Veröffentlichungstag und Bekanntmachung des Hinweises auf die Patenterteilung: **18.07.2001**
(21) Anmeldenummer: 97111293.3
(22) Anmeldetag: 04.07.1997
(51) Int. Cl.: F16B 13/12

(54) **Schlaganker zur Befestigung an dünnwandigen Betonteilen**
Impact expansion bolt for fastening in thin wall concrete elements
Cheville à percussion pour la fixation dans éléments en béton à paroi mince

(30) Priorität: 07.08.1996 DE 29613630 U
(43) Veröffentlichungstag der Anmeldung: 11.02.1998
(73) Patentinhaber: fischerwerke Artur Fischer GmbH & Co. KG, 72178 Waldachtal (DE)
(72) Erfinder: Fischer, Rainer, Dipl.-Ing. (FH), 72178 Waldachtal-Hörschweiler (DE); Hoppe, Hartmut, 72160 Horb a/N (DE)

(56) Entgegenhaltungen:
- EP-A- 0 118 006
- DE-A- 3 102 708
- DE-A- 3 716 298
- DE-A- 4 317 798
- DE-U- 7 612 316
- DE-U- 7 636 399
- GB-A- 2 077 385
- PATENT ABSTRACTS OF JAPAN vol. 009, no. 080 (M-370), 10.April 1985 & JP 59 209439 A (AKIRA MIYAKE), 28.November 1984,

## Beschreibung

Die Erfindung betrifft einen Schlaganker zur Befestigung an dünnwandigen Betonteilen gemäß Oberbegriff des Anspruchs 1.

Aus der DE 295 07 421 U1 sind Befestigungseinrichtungen bekannt, die zur Befestigung von Auslegern an Hohlmasten aus Beton bestimmt sind. Diese bekannten Befestigungseinrichtungen weisen nach außen überstehende Gewindebolzen auf, die oftmals im vormontierten Zustand störend sind.

Aus der DE 31 02 708 A1 ist ein Schlaganker der eingangs genannter Art bekannt, der bündig in eine Bohrung eines Mauerwerks, eines Betonteils oder dergleichen einsetzbar ist. Der Schlaganker besteht aus einer metallischen Hülse, in der ein Spreizkörper einliegt. Mittels eines Einschlagwerkzeugs läßt sich der Spreizkörper zum Aufspeizen der Speizhülse in einen sich konisch verjüngenden Bereich der Längsbohrung der Spreizhülse eintreiben. Der Spreizkörper weist eine Rändelung auf, mit der sich der Spreizkörper im gewindelosen Bereich der Kernbohrung des Schlagankers festklemmt. Über einen Teilbereich weist der Schlaganker ein Innengewinde auf, welches im Durchmesser so groß gewählt ist, daß die Rändelung des Spreizkörpers bei dessen Einführung in den Schlaganker die Gewindegänge nicht zerstört.

Aus der DE 295 18 109.5 ist eine Vorrichtung zur Montage eines Schlagankers bekannt, der zur Befestigung in einer Durchgangsbohrung eines dünnwandigen Betonteils geeignet ist. Die Montagevorrichtung hält den Schlaganker beim Eintreiben des Spreizkörpers in der gewünschten Position fest.

Der Erfindung liegt die Aufgabe zugrunde, einen Schlaganker zu schaffen, der auch in Durchgangsbohrungen dünnwandiger Betonteile insbesondere in Betonholmasten in einer gewünschten Position sicher verankert werden kann.

Die Lösung dieser Aufgabe erhält man durch die im Kennzeichnugsteil des Anspruchs 1 angegebenen Merkmale. Der Schlaganker besitzt einen Sicherungsring, der den in der Längsbohrung des Schlagankers einliegenden Spreizkörper gegen unbeabsichtigtes Herausrutschen sichert. Der Sicherungsring greift zu diesem Zweck mit wenigstens einem Halteelement, welches vorzugsweise als elastischer Flansch ausgebildet ist, in ein Innengewinde ein. Beim Eintreiben des Spreizkörpers liegt das Halteelement an der rückwärtigen Stirnseite des Spreizkörpers an und wird zusammen mit diesem in Richtung Spreizbereich des Schlagankers vorangetrieben, so daß der Spreizkörper in jeder Position durch das Halteelement gegen Zurückrutschen gesichert ist. Bei dem erfindungsgemäßen Schlaganker kann durch die Verwendung des Halteelements das Innengewinde bis zum Spreizbereich hin ausgebildet sein, so daß zur Befestigung eines Gegenstandes ein Gewindebolzen oder eine Schraube entsprechend weit in den Schlaganker eingeschraubt werden kann. Dadurch ergeben sich gegenüber dem Stand der Technik verbesserte Befestigungswerte.

Der Sicherungsring wird zusammen mit dem Halteelement vorzugsweise als einstückiges Kunststoffteil hergestellt.

Besonders vorteilhaft ist es, den Schlaganker am hinteren Ende mit einem sich nach außen erweiternden Öffnungsrand auszubilden, damit dieser sich im Öffnungsbereich des Bohrlochs, in welches der Schlaganker eingesetzt wird, verspannt. Der sich nach außen erweiternde Öffnungsrand fixiert den Schlaganker in einem Durchgangsloch noch sicherer, so daß der Schlaganker auch unter ungünstigen Voraussetzungen im vormontierten Zustand gegen Herausfallen oder Durchfallen gesichert ist.

Damit beim Eintreiben des Spreizkörpers der dazu erforderliche Einschlagdorn direkt am Spreizkörper anliegt, ist gemäß einer Weiterbildung der Erfindung vorgesehen, daß der Einschlagdorn einen im Durchmesser reduzierten Zapfen hat, der durch den Sicherungsring greift. Eine sich an den Zapfen anschließende Schulter kommt während des Eintreibvorgangs mit dem Sicherungsring zur Anlage, so daß dieser von der Schulter in Einschlagrichtung mitgenommen wird. Der Sicherungsring liegt somit in jeder Position am Spreizkörper an und sichert diesen gegen Zurückrutschen.

Damit sichergestellt ist, daß der Spreizkörper bei vormontiertem Schlaganker nicht unbeabsichtigt unter ungünstigen Bedingungen in Richtung Spreizbereich aus dem Schlaganker herausfällt, ist am Spreizkörper vorzugsweise eine Anschlagwulst ausgebildet. Eine dazu korrespondierende Ringschulter in der Längsbohrung des Schlagankers bildet den Anschlag für die Anschlagwulst des Spreizkörpers.

Die Erfindung wird anhand eines in der Zeichnung dargestellten Ausführungsbeispiels näher erläutert.

Es zeigen:
- Figur 1 den: in ein Durchgangsloch eines dünnwandigen Betonteils eingesetzten Schlaganker vor dem Eintreiben des Spreizkörpers und
- Figur 2den: Schlaganker von Figur 1 nach dem vollständigen Eintreiben des Spreizkörpers.

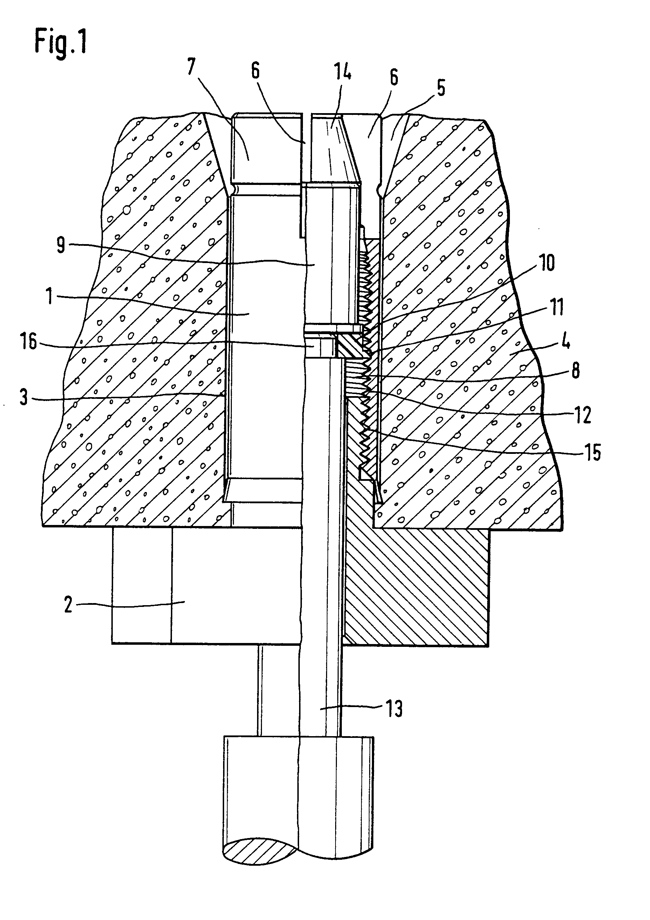

Figur 1 zeigt einen Schlaganker 1, der mittels einer Montagevorrichtung 2 in eine Durchgangsbohrung 3 eines dünnwandigen Betonteils 4 gehalten wird. Die Durchgangsbohrung 3 weist eine Hinterschneidung 5 auf, jedoch ist eine solche Hinterschneidung 5 nicht unbedingt zur Verankerung des Schlagankers erforderlich.

Der Schlaganker 1 besitzt an seinem vorderen Ende Längsschlitze 6, die sich im vorderen Spreizbereich 7 des Schlagankers 1 erstrecken. In einer Längsbohrung 8 liegt ein Spreizkörper 9 ein, an dessen Rückseite ein Sicherungsring 10 aus Kunststoff anliegt. Der Sicherungsring 10 greift mit einem an ihm als Halteelement abstehenden Flansch 11 lösbar in ein Innengewinde 12 des Schlagankers 1 ein, wodurch der Spreizkörper 9 gegen unbeabsichtigtes Zurückrutschen gesichert wird.

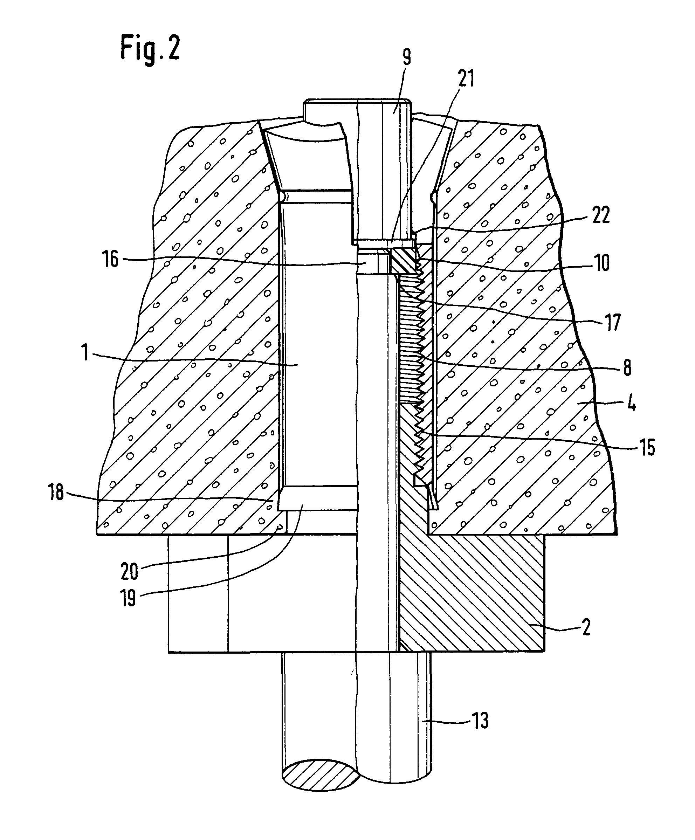

Zur Verankerung des Schlagankers 1 wird der Spreizkörper 9 mittels eines Einschlagdorns 13 in einen sich konisch verjüngenden Bereich 14 der Längsbohrung 8 eingetrieben, wodurch der Schlaganker 1 aufgespreizt wird. Der aufgespreizte Zustand ist in Figur 2 dargestellt.

Beim Eintreiben des Spreizkörpers hält die Montagevorrichtung 2 den Schlaganker in der dargestellten Position. Zu diesem Zweck treibt die Montagevorrichtung 2 mit einem Gewindefortsatz 15 in das Innengewinde 12 des Schlagankers 1 ein. Damit beim Eintreibvorgang der Einschlagdorn 13 direkt an dem Spreizkörper 9 eingreifen kann, hat der Einschlagdorn 13 an seinem vorderen Ende einen im Durchmesser verringerten Zapfen 16, der durch den Sicherungsring 10 greift. Eine Schulter 17 dient als Mitnehmer für den Sicherungsring 10 während des Eintreibvorganges, so daß der Sicherungsring 10 in jeder Position des Spreizkörpers 9 an dessen Rückseite anliegt, wie dies in der Zeichnung dargestellt ist.

Am hinteren Ende 18 des Schlagankers 1 ist dessen Öffnungsrand 19 aufgeweitet, so daß sich dieser an der Bohrlochwandung 20 verspannt. Der Schlaganker 1 wird dadurch nach dem Entfernen des Einschlagdorns 13 und der Montagevorrichtung 2 sicher in dem Betonteil 4 gehalten.

Um an dem Betonteil 4 einen Gegenstand zu befestigen, kann dann eine Gewindestange oder eine entsprechende Schraube in das Innengewinde 12 eingeschraubt werden.

An dem Spreizkörper 9 ist außerdem im rückwärtigen Bereich seiner Mantelfläche eine Anschlagwulst 21 ausgebildet, die den Spreizkörper 9 in Verbindung mit einer in der Längsbohrung 8 ausgebildeten Ringschulter 22 gegen ein Herausfallen nach vorne sichert. Die Ringschulter 22 bildet für diesen Fall einen Anschlag für die Anschlagwulst 21 des Spreizkörpers 9.

## Patentansprüche

1. Schlaganker (1) zur Befestigung an dünnwandigen Betonteilen mit einer in einem vorderen Spreizbereich längsgeschlitzten Metallhülse mit durchgehender, im Spreizbereich sich zum vorderen Ende hin konisch verjüngender Längsbohrung (8), die im nicht geschlitzten Bereich ein Innengewinde (12) hat und in der zum Aufspreizen des Spreizbereichs ein mittels eines Einschlagdorns (13) in den Spreizbereich eintreibbarer Spreizkörper (9) einliegt, **dadurch gekennzeichnet,** daß an der dem Spreizbereich (7) abgewandten Stirnseite des Spreizkörpers (9) ein Sicherungsring (10) anliegt, der mit wenigstens einem lösbar rastenden Halteelement (11), welches den Sicherungsring (10) gegen selbsttätiges Verrutschen sichert, in das Innengewinde (12) eingreift.

2. Schlaganker nach Anspruch 1, **dadurch gekennzeichnet,** daß das Halteelement (11) ein am Sicherungsring (10) angeformter elastischer Flansch ist.

3. Schlaganker nach Anspruch 1, **dadurch gekennzeichnet,** daß der Sicherungsring (10) mit Halteelement (11) ein einstückiges Kunststoffteil ist.

4. Schlaganker nach Anspruch 1, **dadurch gekennzeichnet,** daß der Schlaganker am hinteren Ende einen sich nach außen erweiternden Öffnungsrand (19) hat.

5. Schlaganker nach Anspruch **1, dadurch gekennzeichnet,** daß der Einschlagdorn (13) an seinem vorderen Ende einen im Durchmesser verringerten Zapfen (16) hat, der beim Eintreiben des Spreizkörpers (9) durch den Sicherungsring (10) greift, wobei der Einschlagdorn (13) mit einer Ringschulter (17) an dem Sicherungsring (10) anliegt.

6. Schlaganker nach Anspruch 1, **dadurch gekennzeichnet,** daß am rückwärtigen Ende der Mantelfläche des zylindrischen Spreizkörpers (9) eine Anschlagwulst (21) übersteht, und daß in der Wandung der Längsbohrung (8) im Spreizbereich (7) des Schlagankers (1) eine Ringschulter (22) als Anschlag für die Anschlagwulst (21) ausgebildet ist.

## Claims

1. Impact-type anchor (1) for providing fastening to thin-walled concrete parts, having a metal sleeve that is provided with longitudinal slits in a leading expansible region, which metal sleeve has a through longitudinal bore that tapers conically towards the leading end in the expansible region, which longitudinal bore (8) has an internal thread (12) in the unslit region and in which there is inserted an expander body (9) that can be driven into the expansible region by means of a drive-in rod (13) in order to expand the expansible region, **characterized in that** a retaining ring (10) rests against the face of the expander body (9) remote from the expansible region (7), which retaining ring engages in the internal thread (12) by means of at least one releasably engaging holding element (11), which prevents the retaining ring (10) from slipping of its own accord.

2. Impact-type anchor according to claim 1, **characterized in that** the holding element (11) is a resilient flange formed on the retaining ring (10).

3. Impact-type anchor according to claim 1, **characterized in that** the retaining ring (10) and the holding element (11) are an integral plastics component.

4. Impact-type anchor according to claim 1, **characterized in that** the impact-type anchor has at its rear end at the opening a rim (19) that widens outwardly.

5. Impact-type anchor according to claim 1, **characterized in that** the impact rod (13) has at its leading end a peg (16) of reduced diameter, which engages through the retaining ring (10) as the expander body (9) is driven in, the impact rod (13) coming to rest against the retaining ring (10) by way of an annular shoulder (17).

6. Impact-type anchor according to claim **1, characterized in that** a stop bead (21) projects at the rear end of the surface of the cylindrical expander body (9), and an annular shoulder (22), as stop for the stop bead (21), is formed in the wall of the longitudinal bore (8) in the expansible region (7) of the impact-type anchor (1).

## Revendications

1. Cheville à percussion (1) pour la fixation dans des éléments en béton à paroi mince, munie d'une douille métallique fendue longitudinalement dans une partie avant d'expansion et ayant un alésage longitudinal (8) continu se rétrécissant de manière conique dans la partie d'expansion vers l'extrémité avant, alésage qui possède un filetage intérieur (12) dans la partie non fendue et dans lequel se trouve un corps d'expansion (9) pouvant être enfoncé dans la partie d'expansion pour l'écartement de la partie d'expansion au moyen d'un mandrin à enfoncer (13), **caractérisée en ce qu'**une bague de sûreté (10) est adjacente au côté frontal du corps d'expansion (9) détourné de la partie d'expansion (7), bague de sûreté qui a prise dans le filetage intérieur (12) au moyen d'au moins un élément de maintien (11) encliquetable de manière amovible, cet élément de maintien empêchant un déplacement et un décentrage spontanés de la bague de sûreté (10).

2. Cheville à percussion selon la revendication 1, **caractérisée en ce que** l'élément de maintien (11) est une bride élastique formée sur la bague de sûreté (10).

3. Cheville à percussion selon la revendication 1, **caractérisée en ce que** la bague de sûreté (10) avec l'élément de maintien (11) est une pièce en plastique d'une seule pièce.

4. Cheville à percussion selon la revendication 1, **caractérisée en ce que** la cheville à percussion présente sur l'extrémité arrière un bord d'ouverture (19) s'élargissant vers l'extérieur.

5. Cheville à percussion selon la revendication 1, **caractérisée en ce que** le mandrin à enfoncer (13) présente sur son extrémité avant un tourillon (16) de diamètre réduit, qui s'engage dans la bague de sûreté (10) lors de l'enfoncement du corps d'expansion (9), le mandrin à enfoncer (13) étant adjacent à la bague de sûreté (10) avec un épaulement annulaire (17).

6. Cheville à percussion selon la revendication 1, **caractérisée en ce qu**'un boudin d'arrêt (21) dépasse de l'extrémité arrière de la surface de l'enveloppe du corps d'expansion cylindrique (9), et en ce qu'un épaulement annulaire (22) est formé dans la paroi de l'alésage longitudinal (8) dans la partie d'expansion (7) de la oheville à percussion (1) comme butée pour le boudin d'arrêt (21).
